# EUROPEAN PATENT APPLICATION

(11) **EP 1 443 388 A2**
(43) Date of publication of application: **04.08.2004**
(21) Application number: 04002167.7
(22) Date of filing: 30.01.2004
(51) Int. Cl.: G06F 3/033

(54) **Information processing apparatus and method of displaying operation window**

(30) Priority: 31.01.2003 JP 2003024854
(71) Applicant: Kabushiki Kaisha Toshiba, Tokyo (JP)
(72) Inventor: Fujihito, Numano c/o Toshiba Corporation, Minato-ku, Tokyo 105-8001 (JP)
(74) Representative: Henkel, Feiler & Hänzel

(57) **Abstract**

An information processing apparatus comprises a first display device (12), a second display device (112), and a display controller (201) which displays, on the second display device (112), a first operation window regarding information displayed on the first display device (12).

## Description

The present invention relates to an information processing apparatus comprising a first display device which displays a main operation screen and a second display device which displays a sub operation screen, and a method of displaying an operation window.

Portable personal computers of a notebook type or laptop type have recently been provided with a pointing device which enables, for example, a mouse pointing operation and a numeric key input operation (e.g., refer to Japanese Patent KOKAI Publication No. 2000-339097).

Conventional personal computers of this kind have a problem that an operation window (for fast forward, stop and the like) in a display screen is interfering when, for example, a reproduced image from a DVD is displayed on a display device. When the image is displayed full-screen to avoid this, the operation window is hidden, so that inferior operability has been a problem.

As described above, heretofore, the interfering operation window during reproduction of moving images such as movies has been a functional problem, and the hidden operation window during the full screen has been an operational problem.

The present invention is directed to method and apparatus that substantially obviates one or more of the problems due to limitations and disadvantages of the related art.

According to an embodiment of the present invention, an information processing apparatus comprises:
a first display device;
a second display device; and
a display controller which displays, on the second display device, an operation window regarding information displayed on the first display device.

According to an embodiment of the present invention, a method of displaying an operation window, comprises:
displaying information on a first display device; and
displaying, on a second display device, an operation window regarding the information displayed on the first display device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view showing an external configuration of an information processing apparatus according to an embodiment of the present invention;
FIG. 2 is a block diagram showing a system configuration of the information processing apparatus;
FIG. 3 is a diagram showing functional components of a sub display device in the information processing apparatus;
FIG. 4 is a flowchart showing processing for switching functions of the sub display device;
FIGS. 5A and 5B are views showing display modes of an operation window in the embodiment; and
FIGS. 6A, 6B and 6C are views showing other display modes of the operation window.

An embodiment of an information processing apparatus according to the present invention will now be described with reference to the accompanying drawings.

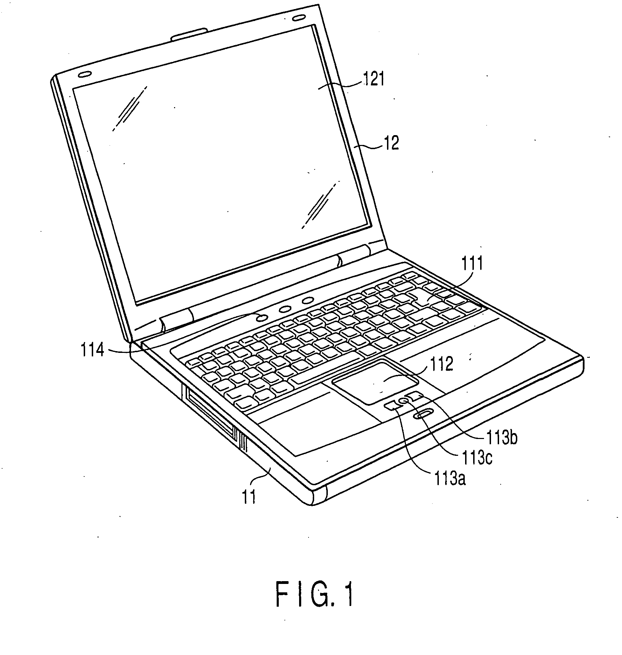

FIG. 1 is a perspective view showing an external configuration of an information processing apparatus according to an embodiment of the present invention. A notebook-type personal computer is shown here as an example.

The notebook-type personal computer comprises a computer main body 11 and a display unit 12. A main display device 121 including an LCD is built into the display unit 12. The display unit 12 is attached to the computer main body 11 rotatably between an open position and a closed position. The computer main body 11 has a thin box-shaped case, and on an upper surface of the case, a power button 114 for turning on/off a power supply of the computer main body 11, a keyboard 111 and the like are disposed. An armrest is formed on the upper surface of the case portion before the keyboard 111. In an almost central portion of the armrest, a sub display device (touch pad device) 112 having a touch screen function is provided. The sub display device 112 forms a display-integrated type pointing device which is integrally provided with a display panel, such as the LCD having a display screen size smaller than that of the main display device 121, and a tablet, and this sub display device 112 is disposed on the upper surface of the case forming the armrest, together with a left button 113a, a right button 113b and a middle button 113c. The tablet is made of a transparent material, and the display panel is provided at the back of the tablet.

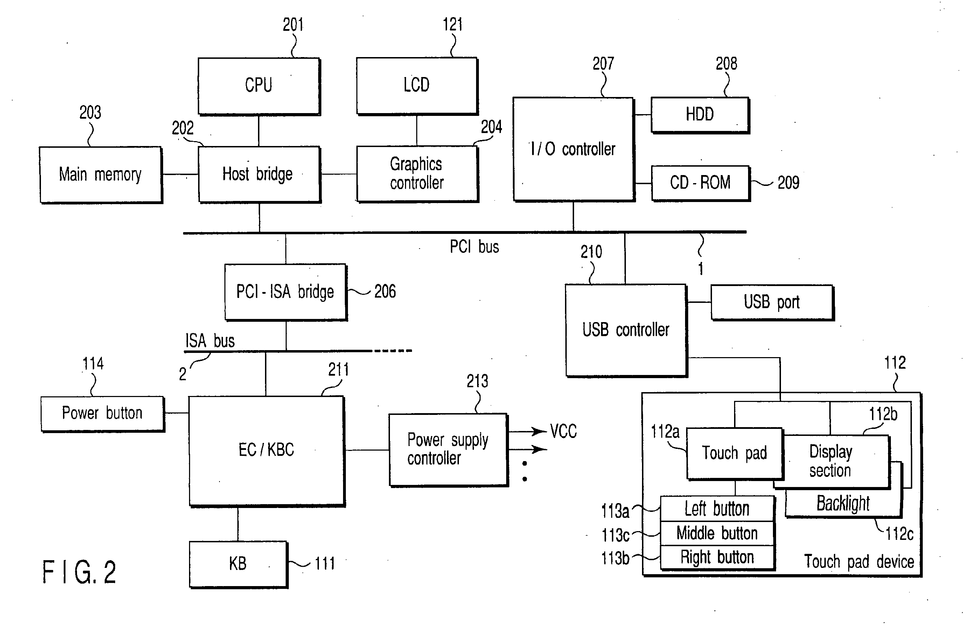

FIG. 2 is a block diagram showing a system configuration of the computer shown in FIG. 1. The present system comprises a CPU 201, a host bridge 202, a main memory 203, a graphics controller 204, a PCI-ISA bridge 206, an I/O controller 207, a hard disk drive (HDD) 208, a CD-ROM drive 209, a USB controller 210, an embedded controller/keyboard controller IC (EC/KBC) 211, a power supply controller 213 and the like.

The sub display device 112 mentioned above is connected to the USB controller 210. The sub display device 112 integrates a touch pad 112a, a display section 112b and a backlight 112c to enable a touch screen function, and includes the left button 113a, the right button 113b and the middle button 113c.

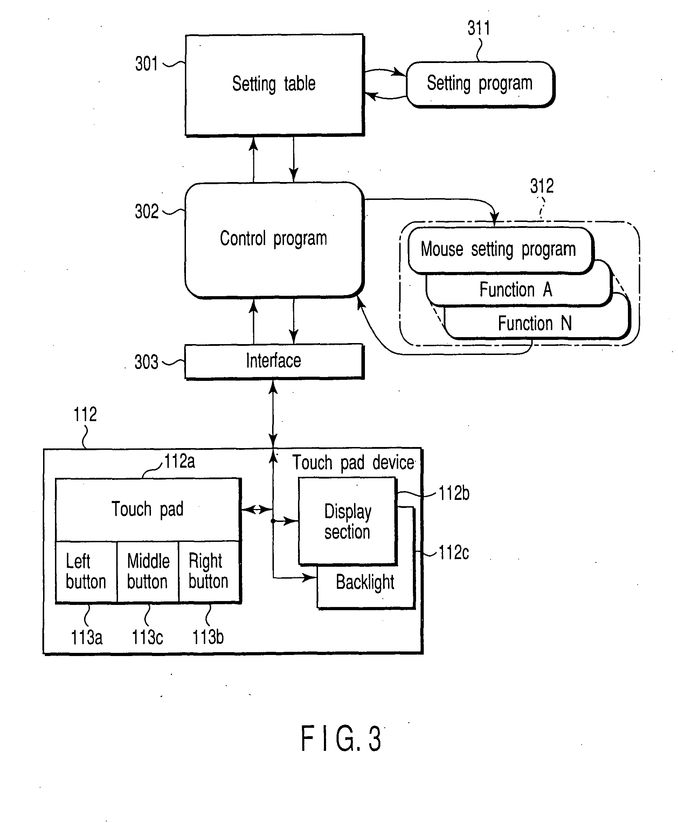

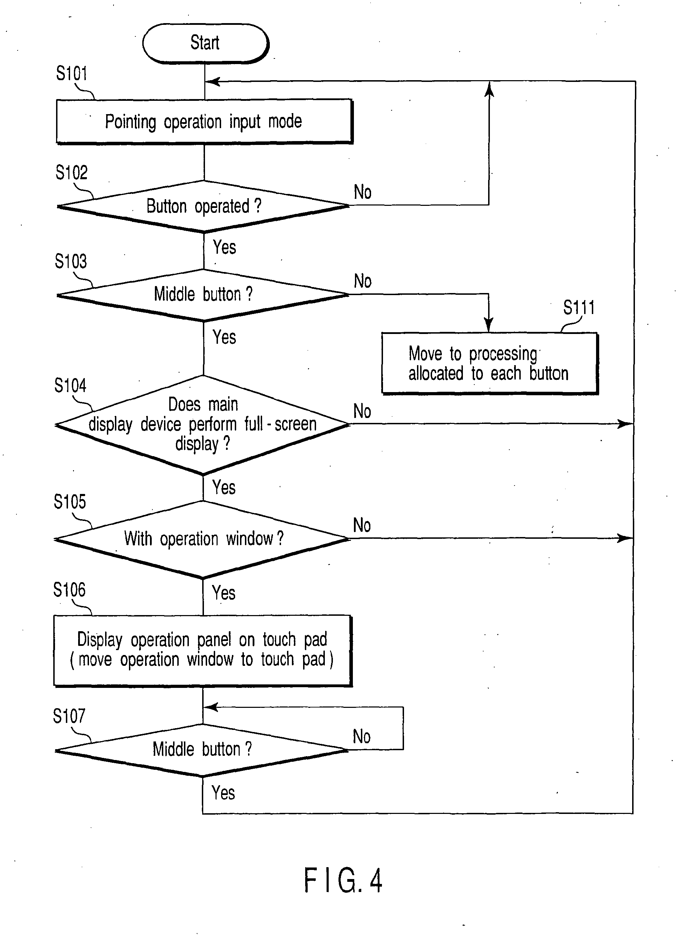

The CPU 201 controls an operation of the present embodiment, and executes an operating system (OS) loaded into the main memory 203 from the hard disk drive (HDD),208, application programs, utility programs and the like. In this embodiment, the CPU 201 executes processing of a control program (see FIG. 3) for the sub display device 112 and processing of an input-output program to enable a positioning processing function of a mouse pointer through one-touch operation on the sub display device 112 as shown in FIG. 4 described later.

The host bridge 202 is a bride device which bi-directionally connects a local bus of the CPU 201 and a PCI bus 1. The graphics controller 204 comprises a video RAM (VRAM), and controls the main display device 121 used as a display monitor of the present embodiment under the control of a dedicated display driver. The I/O controller 207 controls the hard disk drive (HDD) 208, the CD-ROM drive 209 and the like. The PCI-ISA bridge 206 is a bridge device which bi-directionally connects the PCI bus 1 and an ISA bus 2, and various kinds of system devices such as a system timer, a DMA controller and an interrupt controller are built therein.

The embedded controller/keyboard controller IC (EC/KBC) 211 is a one-chip microcomputer in which an embedded controller (EC) for power management and a keyboard controller (KBC) for controlling the keyboard 111 are integrated. The embedded controller/keyboard controller IC (EC/KBC) 211 has a function to power on/off the present embodiment in accordance with an operation of the power button 114 by a user in collaboration with the power supply controller 213.

FIG. 3 is a diagram showing functional components of the sub display device 112 in the embodiment of the present invention, and the components here include a setting table 301 which sets a function of the sub display device 112; a control program 302 which controls the function of the sub display device 112 in accordance with contents of the setting table 301; an interface 303 which controls input and output of information exchanged between the sub display device 112 and the control program 302; a setting program 311 which creates the setting table 301 by use of a GUI; execution means 312 for executing various kinds of processing in accordance with instructions from the control program 302; and the sub display device 112.

In this embodiment, the execution means 312 switches the function of the sub display device 112 between a pointing function which follows control of a mouse setting program and an operation window function for displaying on the sub display device 112 the operation window regarding information displayed on the main display device 121 to enable the touch operation of the operation window (see FIG. 4).

FIG. 4 is a flowchart showing a processing procedure for switching functions of the sub display device 112 in the embodiment of the present invention, which is achieved by a cooperative processing of the control program 302 of the sub display device 112, the mouse driver and an input-output control program. A main screen operation function through the touch operation on the operation window using the sub display device 112 can be accomplished by switching the function of an operation panel to an operation window function. Here, as an example, when the sub display device 112 is in a state set to the ordinary pointing function, the middle button 113c provided at the sub display device 112 is operated so as to switch the sub display device 112 to the operation window function.

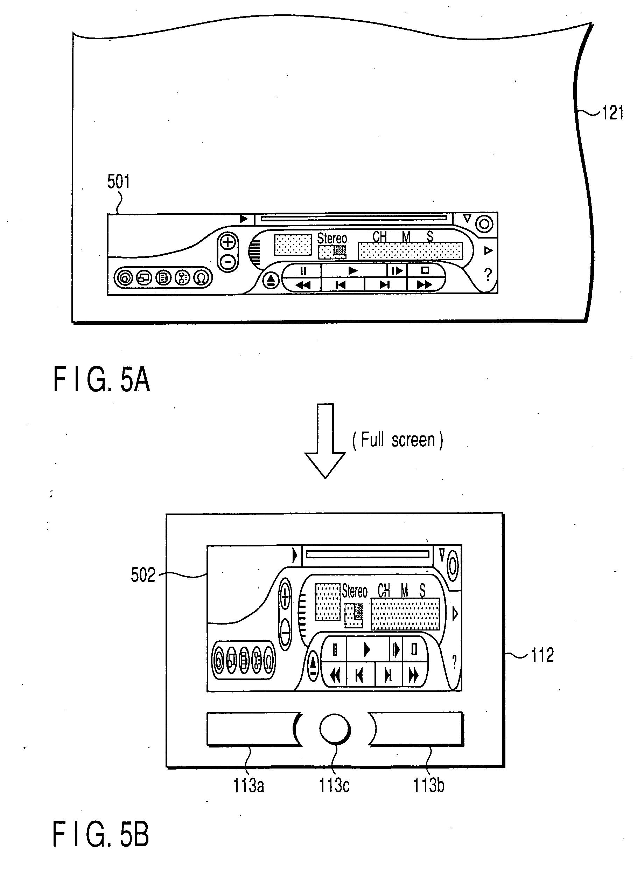

FIGS. 5A and 5B are views explaining an operation in the embodiment, and here show an example as follows: when information displayed on the main display device 121 is displayed full-screen, an operation window 501 regarding the information displayed full-screen on the main display device 121 is displayed as an operation window 502 on the sub display device 112 in accordance with the operation of the middle button 113c, and the touch operation is performed on the operation window 502 displayed on the sub display device 112, thereby enabling the operation regarding the information displayed full-screen on the main display device 121.

In addition to the processing function shown in FIGS. 5A and 5B, it is also possible to achieve a function in which functions of the operation window 501 are entirely moved to the sub display device 112 as the operation window 502 when the main display device 121 turns to full-screen display. Alternatively, the following function can also be carried out; the operation window 501 is not displayed on the main display device 121, and the information displayed on the main display device 121 includes the operation' window 501, the operation window 501 is displayed on the sub display device 112 as the operation window 502. Alternatively, the following function can also be carried out; when a predetermined even occurs (e.g., a command or an operation instruction is given), the window for that event is displayed as the operation window 502 on the sub display device 112 in a state where the operation window 501 is displayed on the main display device 121. Alternatively, the following function can also be carried out; when the information displayed on the main display device 121 has a plurality of windows, a predetermined window out of those windows is displayed on the sub display device 112. Further, in this case, an interchange instruction can be issued to interchange the window displayed on the main display device 121 and the window displayed on the sub display device 112. Still further, it is also possible to display an operation window having part of the functions of the operation window 501 rather than all the functions thereof on the sub display device 112 as the operation window 502, in each type of processing described above. These processing functions are accomplished by the cooperative processing of the control program 302 of the sub display device 112, the mouse driver and the input-output control program.

An operation in the embodiment of the present invention will here be described in reference to the drawings. It should be noted that the operation of the embodiment will be described here taking the operation window function as an example in which when the main display device 121 performs full-screen display and the information displayed full-screen includes an operation window regarding this information, this operation window is displayed on the sub display device 112.

After startup of the system, the sub display device 112 is in the ordinary pointing function that follows the mouse setting program, that is, the pointing operation input mode which enables the mouse pointer on the main display device 121 to move by sliding a finger on the sub display device 112 (step S101 of FIG. 4). At this moment, the sub display device 112 does not display anything.

In this state, when the middle button 113c is operated (Yes in step S102, Yes in step S103), if the main display device 121 performs full-screen display (Yes in step S104) and the information displayed full-screen includes an operation window regarding this information (Yes in step S105), the sub display device 112 switches from the pointing operation input mode to the operation input mode of the operation window function, and then the operation window regarding the full-screen-displayed information is displayed on the sub display device 112 instead of the main display device 121 (step S106). One example of the operation window displayed on the sub display device 112 in this case is shown in FIG. 5B.

When the sub display device 112 is in a state displaying the operation window 502 shown in FIG. 5B, that is, when the sub display device 112 is in the operation input mode of the operation window function where it displays the operation window 502 regarding the information displayed (full-screen) on the main display device 121 to enable the touch operation on the operation window 502, if the middle button 113c is operated again (Yes in step S107), the function (operation input mode) of the sub display device 112 returns from the operation input mode of the operation window function to the ordinary pointing operation input mode (step S101).

Furthermore, when the sub display device 112 is in the pointing operation input mode (step S101), if the button 113a or 113b other than the middle button 113c is operated (Yes in step S102, No in step S103), processing for the function allocated to the operated button 113a or 113b is executed (step S111).

In this way, the middle button 113c provided at the sub display device 112 can be operated to easily switch the sub display device 112 between the operation input mode of the operation window function where the sub display device 112 displays the operation window regarding the information displayed on the main display device 121 to enable the touch operation on the operation window, and the ordinary pointing operation input mode, thereby making it possible to perform the finger touch operation to directly operate the operation window regarding the information displayed on the main display device 121 in the operation input mode of the operation window function. In this way, the interfering display of the operation window can be eliminated so as to view a video program such as a movie in an optimum display environment, and various kinds of operations and control of the viewed program can be easily and quickly performed by the finger touch operation.

For the operational functions of the operation window regarding the information displayed on the main display device 121, the sub display device 112 displays the operation window which enables the operation of those functions on behalf of the main display device 121 as shown in FIGS. 5A and 5B. However, for example, part of the operational functions limited to only the primary operational functions out of the functions of the operation window regarding the information displayed on the main display device 121, or all the functions of the operation window regarding the information displayed on the main display device 121 are hierarchized, and the hierarchized operation windows are switched by a predetermined button operation or the touch operation (tap operation) on the sub display device 112, thereby making it possible to provide an operation window with high operability in the limited display area of the sub display device 112.

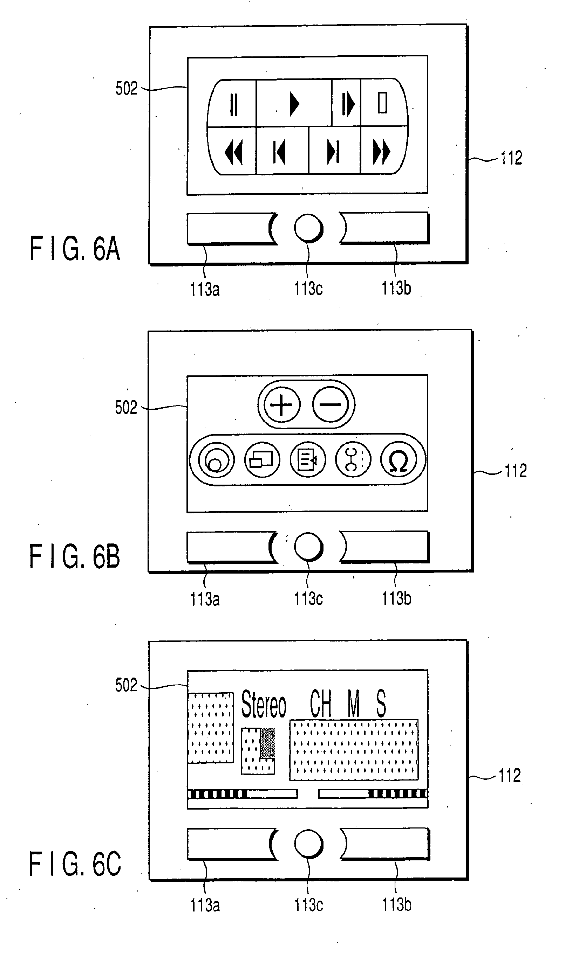

FIGS. 6A, 6B and 6C show configuration examples of the operation window corresponding to the operational functions shown in FIGS. 5A and 5B in this case. FIG. 6A shows an operation window equipped with primary operation buttons which are part of the operational functions of the operation window shown in FIG. 5A. FIGS. 6B and 6C show operation windows in which the functions of the operation window shown in FIG. 5A except for the functions shown in FIG. 6A are hierarchized. With a function to sequentially switch and display those hierarchized operation windows shown in FIGS. 6A to 6C by the operation of predetermined window switch means, for example, the right button 113b or by the touch operation on the sub display device 112, an operation window with higher operability can be provided in the limited display area of the sub display device 112.

According to the embodiment described above, when the middle button 113c is operated, if the main display device 121 performs full-screen display and the information displayed full-screen includes the operation window regarding this information, the sub display device 112 switches from the pointing operation input mode to the operation input mode of the operation window function. However, if, for example, the operation window having all or part of the operational functions of the operation window displayed on the main display device 121 is displayed on the sub display device 112, the operation window displayed on the main display device 121 and the operation window displayed on the main display device 121 can be optionally used to provide an environment where the operation windows can be conveniently used, and if a direct operation can be performed through finger touch, it is possible to simplify the operation button functions and improve operability.

Further, with the presence of a plurality of operation windows regarding the information displayed on the main display device 121, the operation window having all or part of operational functions of at least one of the plurality of operation windows is displayed on the main display device 121, thereby enabling various kinds of information processing operations to be performed efficiently and quickly.

Still further, with the function to interchange the window displayed on the main display device 121 and the window displayed on the sub display device 112, various kinds of information processing operations can be performed efficiently and quickly.

In addition, in the embodiment described above, the middle button 113c is operated to switch the function (operation input mode) of the sub display device 112 between the operation window function and the ordinary pointing function. However, without limiting to this, when the operation window regarding the information on an application program displayed on the main display device 121 is displayed on the sub display device 112, it is also possible to provide a function to return the sub display device 112 to a state before the operation window is displayed, upon termination of the application program.

As described above, according to the present embodiment, a pointing device into which a display panel is integrated is used, and the pointing device is provided in a main body, in a keyboard case or the like, so that the operation window regarding the main screen is displayed on the display panel of the pointing device, thereby enabling the direct touch operation of the operation window on the display panel. In this way, the interfering operation window in the display screen is eliminated to improve functionality, and the direct touch operation on the operation window can improve operability.

Furthermore, the operation window having part of operational functions of the operation window regarding the main screen is displayed on the display panel of the pointing device, thereby making it possible to provide an environment where the operation windows can be conveniently used.

According to the embodiment of the present invention, there are provided an information processing apparatus and a method of displaying an operation window with excellent functionality and operability.

While the description above refers to a particular embodiment of the present invention, it will be understood that many modifications may be made without departing from the spirit thereof. The accompanying claims are intended to cover such modifications as would fall'within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

## Claims

1. An information processing apparatus comprising:
a first display device (12); and
a second display device (112), **characterized by** further comprising:
a display controller (201) which displays, on the second display device (112), an operation window regarding information displayed on the first display device (12).

2. The apparatus according to claim 1, **characterized in that**
the second display device (112) comprises a touch screen function integrally provided with a tablet; and
the display controller (201) displays, on the second display device (112), a second operation window including all or part of a first operation window regarding the information displayed on the first display device (12), whereby the second operation window can be operated by a touch operation.

3. The apparatus according to claim 2, **characterized in that** the display controller (201) displays, on the second display device (112), the second operation window in accordance with a given condition.

4. The apparatus according to claim 1, **characterized in that**
the first display device (12) displays a first operation window regarding information displayed on the first display device (12);
the second display device (112) displays a second operation window including all or part of the first operation window; and
the display controller (201) makes the first and second display device (112) display the second and first operation windows, whereby the first operation window can be operated by a touch operation.

5. The apparatus according to claim 1, **characterized in that**
the first display device (12) displays a first operation window regarding information displayed on the first display device (12);
the second display device (112) comprises a touch screen function integrally provided with a tablet; and
the display controller (201) displays, on the second display device (112), the first operation window, whereby the first operation window can be operated by a touch operation.

6. The apparatus according to claim 5, **characterized in that** the display controller (201) displays, on the second display device (112), the first operation window, when the first display device (12) displays a full-screen image.

7. The apparatus according to claim 1, **characterized in that**
the second display device (112) comprises a touch screen function integrally provided with a tablet; and
the display controller (201) displays, on the second display device (112), a second operation window including all or part of first operation windows regarding the information displayed on the first display device (12), whereby the second operation window can be operated by a touch operation.

8. The apparatus according to claim 1, **characterized in that**
the second display device (112) comprises a touch screen function integrally provided with a tablet; and
the display controller (201) displays, on the second display device (112), one of hierarchized second operation windows including all or part of a first operation window regarding the information displayed on the first display device (12), whereby the second operation window can be operated by a touch operation.

9. The apparatus according to claim 1, **characterized in that** the second display device (112) comprises an operation member which canceling display of the operation window; and the display controller (201) returns the second display device (112) to a state before the operation window is displayed in accordance with an operation of the operation member.

10. The apparatus according to claim 1, **characterized in that** the display controller (201), when the operation window regarding information on an application program displayed on the first display device (12) is displayed on the second display device (112), returns the second display device (112) to a state before displaying the operation window in accordance with termination of the application program.

11. A method of displaying an operation window, **characterized by** comprising:
displaying information on a first display device (12); and
displaying, on a second display device (112), an operation window regarding the information displayed on the first display device (12).

12. The method according to claim 11, **characterized in that**
the second display device (112) comprises a touch screen function integrally provided with a tablet; and a second operation window including all or part of a first operation window regarding the information displayed on the first display device (12) is displayed on the second display device (112), whereby the second operation window can be operated by a touch operation.

13. The method according to claim 12, **characterized in that** the second operation window is displayed on the second display device (112) in accordance with a given condition.

14. The method according to claim 11, **characterized in that**
the first display device (12) displays a first operation window regarding information displayed on the first display device (12);
the second display device (112) displays a second operation window including all or part of the first operation window; and further comprising:
making the first and second display device (112) display the second and first operation windows, whereby the first operation window can be operated by a touch operation.

15. The method according to claim 11, **characterized in that**
the first display device (12) displays a first operation window regarding information displayed on the first display device (12);
the second display device (112) comprises a touch screen function integrally provided with a tablet; and further comprising:
displaying the first operation window on the second display device (112), whereby the first operation window can be operated by a touch operation.

16. The method according to claim 15, **characterized in that** the first operation window is displayed on the second display device (112), when the first display device (12) displays a full-screen image.

17. The method according to claim 11, **characterized in that**
the second display device (112) comprises a touch screen function integrally provided with a tablet; and further comprising:
displaying a second operation window including all or part of first operation windows regarding the information displayed on the first display device (12) on the second display device (112), whereby the second operation window can be operated by a touch operation.

18. The method according to claim 11, **characterized in that**
the second display device (112) comprises a touch screen function integrally provided with a tablet; and further comprising:
displaying one of hierarchized second operation windows including all or part of a first operation window regarding the information displayed on the first display device (12) on the second display device (112), whereby the second operation window can be operated by a touch operation.

19. The method according to claim 11, **characterized in that** the second display device (112). comprises an operation member which canceling display of the operation window; and further comprising:
returning the second display device (112) to a state before the operation window is displayed in accordance with an operation of the operation member.

20. The method according to claim 11, **characterized by** further comprising:
displaying an application program on the first display device (12);
displaying an operation window regarding the application program displayed on the first display device (12) on the second display device (112); and
returning the second display device (112) to a state before displaying the operation window in accordance with termination of the application program.
